# EUROPEAN PATENT SPECIFICATION

(11) **EP 2 103 722 B1**
(45) Date of publication and mention of the grant of the patent: **03.08.2011**
(21) Application number: 07850861.1
(22) Date of filing: 19.12.2007
(51) Int. Cl.: D01F 9/08, D01D 5/00

(54) **CERAMIC FIBER AND METHOD FOR PRODUCTION OF CERAMIC FIBER**
KERAMIKFASER UND HERSTELLUNGSVERFAHREN DAFÜR
FIBRE CÉRAMIQUE ET PROCÉDÉ DE PRODUCTION DE FIBRE CÉRAMIQUE

(30) Priority: 27.12.2006 JP 2006351765
(43) Date of publication of application: 23.09.2009
(73) Proprietor: Teijin Limited, Osaka-shi, Osaka 541-0054 (JP)
(72) Inventor: MIYOSHI, Takanori, Iwakuni-shi Yamaguchi 740-0014 (JP); KOMURA, Shinya, Iwakuni-shi Yamaguchi 740-0014 (JP); SATO, Yusuke, Iwakuni-shi Yamaguchi 740-0014 (JP)
(74) Representative: Hallybone, Huw George
(86) International application number: PCT/JP2007/074391
(87) International publication number: WO 2008/078619

(56) References cited:
- WO-A1-2006/129844
- JP-A- 2006 336 120
- US-A- 5 997 832
- US-A1- 2006 065 021
- US-A1- 2006 115 648

## Description

### [Technical Field]

The present invention relates to a ceramic fiber containing titanium atoms, silicon atoms and aluminum atoms, and to a method for production of the same. More specifically, the invention relates to a ceramic superfine fiber with excellent heat resistance and photocatalytic activity, and to a method for its production.

### [Background Art]

Ceramic fibers are useful materials for a variety of fields including electrical insulating materials, heat insulating materials, fillers and filters, because of their favorable properties such as electrical insulation, low thermal conductivity and high elasticity. Such ceramic fibers are usually produced by melting methods, spindle methods, blowing methods or the like, to fiber diameters of generally a few µm (see Patent document 1).

In recent years, ever finer ceramic fibers have been sought, particularly in the fields of fillers and filters, in order to increase the bonding area with matrix materials and improve filter efficiency.
For example, Patent document 6 discloses nanofibers which are made from composite materials comprised of at least two of SiC, Si₃N₄, Al₂O₃, and so forth.

However, there have been limitations to the minimum fiber diameters possible with ceramic fibers obtained by conventional methods. Furthermore, because the melt spinning step must be carried out at high temperatures of near 2000°C, non-fibrous particulate matter known as "shots" become incorporated and a step of removing the shots has been necessary before such ceramic fibers can be used as filters.

Electrospinning using materials composed of organic polymers is a known method for producing finer fibers than have conventionally been produced in the prior art. Electrospinning methods allow fine fiber structures to be conveniently obtained by application of a high voltage to a solution dissolving a fiber-forming solute such as an organic polymer, for electrification, causing the solution to be ejected toward an electrode, with the ejection causing evaporation of the solvent (see Patent document 2).

It is already known that, in addition to organic polymers, titania fibers can also be produced by electrospinning (see Non-patent document 1). Because titania fibers have photocatalytic activity, they are increasingly being considered promising for purposes that require such activity.
It is further known that, in addition to organic polymers, inorganic fibers such as alumina fibers, and so on, can also be produced by electrospinning (see Patent document 4, and Patent document 5).

Methods are also already known for electrospinning in the production of ceramic superfine fibers composed of silicon, oxygen, carbon and transition metals (see Patent document 3). Since the silicon-containing ceramic superfine fibers described in Patent document 3 have photocatalytic activity and can withstand high temperature use, they are useful for a wide variety of purposes.
[Patent document 1] Japanese Unexamined Patent Publication No. 2003-105658
[Patent document 2] Japanese Unexamined Patent Publication No. 2002-249966
[Patent document 3] International Patent Publication No. WO2006/001403
[Patent document 4] International Patent Publication No. WO2006/129844
[Patent document 5] Japanese Unexamined Patent Publication No. 2006-336120
[Patent document 6] US 2006/0115648 A1
[Non-patent document 1] Dan Li, Younan Xia, "Fabrication of Titania Nanofibers by Electrospinning", April, 2003, Vol.3, No.4, p.555-560

### [Disclosure of the Invention]

### [Problems to be Solved by the Invention]

However, titania fibers obtained by the method described in Non-patent document 1, when heated at 600°C or higher, undergo a crystal structure conversion to the rutile form. Since rutile crystals have a crystal form with low photocatalytic activity, the titania fibers described in Non-patent document 1 have not been usable for purposes requiring photocatalytic activity that include exposure to high-temperature environments.

Cost has been an issue for the ceramic fibers described in Patent document 3 because they can only be obtained with expensive silicon-containing polymers, while the use of halogen-based solvents for their preparation has raised concerns about environmental effects.

The present invention has been accomplished in light of the problems described above, and its object is to provide a ceramic fiber with a small fiber diameter and with sufficient photocatalytic activity even when exposed to high-temperature environments, and with advantages in terms of cost and environmental safety during production, as well as a method for production of the ceramic fiber.

### [Means for Solving the Problems]

The present inventors have conducted much diligent research on the problems mentioned above. As a result, it was discovered that if a composition containing titanium atoms, silicon atoms and aluminum atoms is used to produce a fiber aggregate from the composition by electrospinning and calcination of the aggregate, it is possible to obtain ceramic fiber, from an inexpensive starting material, which has a small fiber diameter and exhibits sufficient photocatalytic activity even when exposed to high-temperature environments, and the invention has been completed upon this discovery.

Specifically, the invention relates to ceramic fiber composed of an oxide ceramic containing titanium atoms, silicon atoms and aluminum atoms, having a mean fiber diameter of between 50 nm and 1000 nm.

Another aspect of the invention relates to a method for production of a ceramic fiber that comprises a fiber-forming composition preparation step in which a fiber-forming composition containing a titanium compound, silicon compound, aluminum compound, water and a fiber-forming substance is prepared, a spinning step in which the fiber-forming composition is ejected by an electrospinning process to obtain fiber, an accumulation step in which the fiber is accumulated to obtain a fiber aggregate, and a calcination step in which the fiber aggregate is calcined to obtain a fiber structure.

### [Effect of the Invention]

The ceramic fiber of the invention has a small mean fiber diameter and is therefore flexible. Moreover, because the surface area is larger than conventional photocatalytic fibers, adequate catalytic efficiency can be exhibited when the fiber is used in a photocatalytic filter or catalyst support base.

The ceramic fiber of the invention also has sufficient photocatalytic activity even when exposed to high-temperature environments. Satisfactory photocatalytic activity can therefore be exhibited even in environments that require heat resistance.

In addition, because the ceramic fiber of the invention is in fiber form, the post-processing is easier than with conventional powdered photocatalytic materials, and the catalyst may be used directly without addition of binders or the like for binding. When a ceramic fiber of the invention is used as a filter or the like, it is possible to prevent loss of particles due to decomposition of the binder, and to prevent reduction in catalyst efficiency caused by high binder content.

Since the ceramic fiber of the invention thus has a small fiber diameter and sufficient photocatalytic activity even when exposed to high-temperature environments, and can be used directly without addition of a binder or the like for binding, it is useful for photocatalytic filters and catalyst support bases.

The ceramic fiber of the invention can also form various types of structures when worked by interleaving and the like. In addition, it can be combined with ceramic fibers other than the ceramic fiber of the invention for increased handleability or for other required purposes.

### [Brief Description of the Drawings]

Fig. 1 is a schematic view of an apparatus for production of a ceramic fiber of the invention.
Fig. 2 is a scanning electron microscope photograph (20,000x) of the surface of the ceramic fiber obtained in Example 1.
Fig. 3 is a scanning electron microscope photograph (20,000x) of the surface of the ceramic fiber obtained in Example 2.
Fig. 4 is a scanning electron microscope photograph (20,000x) of the surface of the ceramic fiber obtained in Comparative Example 1.
Fig. 5 is a scanning electron microscope photograph (20,000x) of the surface of the ceramic fiber obtained in Example 3.
Fig. 6 is a scanning electron microscope photograph (20,000x) of the surface of the ceramic fiber obtained in Example 4.
Fig. 7 is a scanning electron microscope photograph (20,000x) of the surface of the ceramic fiber obtained in Example 5.
Fig. 8 is a scanning electron microscope photograph (20,000x) of the surface of the ceramic fiber obtained in Example 6.
Fig. 9 is a scanning electron microscope photograph (20,000x) of the surface of the ceramic fiber obtained in Example 7.
Fig. 10 is a scanning electron microscope photograph (20,000x) of the surface of the ceramic fiber obtained in Example 8.
Fig. 11 is a scanning electron microscope photograph (20,000x) of the surface of the ceramic fiber obtained in Comparative Example 2.
Fig. 12 is a scanning electron microscope photograph (20,000x) of the surface of the ceramic fiber obtained in Example 9.
Fig. 13 is a scanning electron microscope photograph (20,000x) of the surface of the ceramic fiber obtained in Example 10.
Fig. 14 is a scanning electron microscope photograph (20,000x) of the surface of the ceramic fiber obtained in Example 11.
Fig. 15 is a scanning electron microscope photograph (20,000x) of the surface of the ceramic fiber obtained in Example 12.
Fig. 16 is a scanning electron microscope photograph (20,000x) of the surface of the ceramic fiber obtained in Comparative Example 3.
Fig. 17 is a scanning electron microscope photograph (20,000x) of the surface of the ceramic fiber obtained in Example 13.
Fig. 18 is a scanning electron microscope photograph (20,000x) of the surface of the ceramic fiber obtained in Comparative Example 4.
Fig. 19 is a scanning electron microscope photograph (20,000x) of the surface of the ceramic fiber obtained in Comparative Example 5.
Fig. 20 is a scanning electron microscope photograph (20,000x) of the surface of the ceramic fiber obtained in Comparative Example 6.
Fig. 21 is a scanning electron microscope photograph (20,000x) of the surface of the ceramic fiber obtained in Comparative Example 7.
Fig. 22 is a scanning electron microscope photograph (20,000x) of the surface of the ceramic fiber obtained in Example 14.

### [Explanation of Symbols]

1 Fiber-forming composition ejection nozzle
2 Fiber-forming composition
3 Fiber-forming composition holding tank
4 Electrode
5 High voltage generator

### [Best Mode for Carrying Out the Invention]

The invention will now be explained in detail.

### <Ceramic fiber>

The ceramic fiber of the invention is composed of an oxide ceramic containing between 5 mol% and 80 mol% titanium atoms, between 1 mol% and 50 mol% silicon atoms and between 10 mol% and 90 mol% aluminum atoms, with respect to the total atomic weight of elements other than oxygen atoms, and wherein the total of the titanium atom content and aluminium content is preferably greater than 65 mol% with respect to the total atomic weight of elements other than oxygen atoms and having a mean fiber diameter of between 50 nm and 1000 nm.

### [Titanium atom content]

The titanium atom content of the ceramic fiber of the invention is between 5 mol% and 80 mol% with respect to the total atomic weight of elements other than oxygen in the fiber. The titanium atom content is preferably not less than 5 mol% because the photocatalytic activity will be reduced. It is also preferably not greater than 90 mol% because the fiber will become embrittled. The titanium atom content is more preferably between 10 mol% and 70 mol%, and especially between 12 mol% and 65 mol%.

### [Silicon atom content]

The silicon atom content of the ceramic fiber of the invention is between 1 mol% and 50 mol% with respect to the total atomic weight of elements other than oxygen in the fiber. The silicon atom content is preferably not less than 1 mol% or greater than 50 mol% because the photocatalytic activity may be lost after heat treatment. The silicon atom content is more preferably between 1 mol% and 40 mol%, and especially between 2 mol% and 35 mol%.

### [Aluminum atom content]

The aluminum atom content of the ceramic fiber of the invention is between 10 mol% and 90 mol% with respect to the total atomic weight of elements other than oxygen in the fiber. The aluminum atom content is preferably not less than 10 mol% because the heat resistance of the ceramic fiber will be impaired. It is also preferably not greater than 90 mol% because the photocatalytic activity will be reduced. The aluminum atom content is more preferably between 15 mol% and 80 mol%, and especially between 20 mol% and 75 mol%.

The total of the titanium atom content and aluminum atom content is greater than 65 mol% with respect to the total atomic weight of elements other than oxygen in the fiber. The total of the titanium atom and aluminum atom content is preferably not lower than 65 mol% because the photocatalytic activity will be lost after heat treatment.

### [Other atoms]

The ceramic fiber of the invention may also contain atoms other than titanium atoms, silicon atoms and aluminum atoms for improved dynamic strength. As examples of atoms other than titanium atoms, silicon atoms and aluminum atoms to be included in the ceramic fiber there may be mentioned zirconium, germanium, zinc, nickel, vanadium, tungsten, yttrium, boron, iron, lead, magnesium and the like, among which zirconium is preferred from the viewpoint of improving the flexibility and heat resistance of the obtained ceramic fiber.

### [Mean fiber diameter of ceramic fiber]

The mean fiber diameter of the ceramic fiber will now be explained. The mean fiber diameter of the ceramic fiber of the invention is between 50 nm and 1000 nm. With a mean fiber diameter in the range of 50 nm to 1000 nm, the ceramic fiber of the invention will exhibit durability to withstand high temperature use. The mean fiber diameter of the ceramic fiber preferably does not exceed 1000 nm because the increased specific surface area will reduce the surface for photocatalytic reaction, while the mean fiber diameter is preferably not less than 50 nm because the ceramic fiber strength will be reduced.

The mean fiber diameter is more preferably in the range of 70 nm to 600 nm and even more preferably in the range of 100 nm to 500 nm.

### [Sections with fiber diameter of 2000 nm or greater]

The ceramic fiber of the invention preferably contains no sections with a fiber diameter of 2000 nm or greater. The phrase "contains no sections with a fiber diameter of 2000 nm or greater" means that no sections of 2000 nm or greater are observed at any arbitrary location of the fiber using an electron microscope. The fiber preferably contains no sections with a fiber diameter of 2000 nm or greater because such sections will not effectively utilize light for photocatalytic reaction. More preferably, the ceramic fiber of the invention contains no sections with a fiber diameter of 1500 nm or greater.

### [Fiber length]

The ceramic fiber of the invention preferably as a fiber length of at least 10 µm. The fiber length of the ceramic fiber is preferably not less than 10 µm because the dynamic strength will be insufficient when the obtained ceramic fiber is used as a fiber structure. The length is preferably at least 20 µm and even more preferably at least 100 µm.

### [Photocatalytic activity (fiber crystal structure) after heat treatment]

Since the ceramic fiber contains titanium atoms, silicon atoms and aluminum atoms according to the invention, it can more easily maintain anatase crystals with high photocatalytic activity and prevent transition to rutile crystals, even when exposed to high-temperature environments.

The ceramic fiber of the invention preferably has photocatalytic activity after heat treatment at 1000°C for 10 minutes. If this condition is satisfied, the fiber will be usable without loss of function even in high-temperature environments. The ceramic fiber of the invention more preferably has photocatalytic activity after heat treatment at 1000°C for 20 minutes.

### <Method for production of ceramic fiber>

A mode for production of the ceramic fiber of the invention will now be explained.

The ceramic fiber according to the invention can be produced by any method that can yield a ceramic fiber satisfying all of the aforementioned conditions, but a preferred mode for production of the ceramic fiber comprises a fiber-forming composition preparation step in which a fiber-forming composition containing a titanium compound, silicon compound, aluminum compound and a fiber-forming substance is prepared, a spinning step in which the fiber-forming composition is ejected by an electrospinning process to obtain fiber, an accumulation step in which the fiber is accumulated to obtain a fiber aggregate, and a calcination step in which the fiber aggregate is calcined to obtain a fiber structure.

In the production method of the invention, fiber may be formed by an electrospinning process to obtain fiber free of shots even immediately after calcination.

Constituent components for the fiber-forming composition and the production steps will now be explained, as a preferred mode of a method for obtaining the ceramic fiber of the invention.

### [Fiber-forming composition]

A fiber-forming composition for use in a preferred mode for production of the ceramic fiber of the invention will now be described. The preferred fiber-forming composition contains, as essential components, a titanium compound, silicon compound, aluminum compound, water and a fiber-forming substance. The construction of the fiber-forming composition will now be described.

### [Titanium compound]

The titanium compound may be any one that is soluble in water-containing solvents and that forms titanium oxides in the subsequent calcination step. As examples of such compounds there may be mentioned titanium compounds obtained by hydrolysis of alkyl titanate compounds in water, as well as diammonium dihydroxy titanium lactate (titanium(IV) bis(ammonium lactato)dihydroxide). As examples of alkyl titanate compounds there may be mentioned tetrabutoxy titanium, tetraisopropyl titanium and tetra-n-propyl titanium, among which tetrabutoxy titanium is preferred from the viewpoint of stability of the solution.

### [Silicon compound]

The silicon compound may be any one that is soluble in water-containing solvents and that forms silicon oxides in the subsequent calcination step. As examples of such compounds there may be mentioned silicon compounds obtained by hydrolysis of alkyl silicates in water. As examples of alkyl silicates there may be mentioned tetraethoxy silane, tetrapropoxy silane, tetrabutoxy silane and tetradecyloxy silane, among which tetraethoxy silane is preferred from the viewpoint of stability of the solution and availability.

### [Aluminum compound]

The aluminum compound may be any one that is soluble in water-containing solvents and that forms aluminum oxides in the subsequent calcination step. As examples of such compounds there may be mentioned basic aluminum chloride and aluminum lactate, among which basic aluminum chloride is preferred from the viewpoint of stability in the subsequent spinning step. Basic aluminum chloride is a compound represented by the general formula Al(OH)₃₋ₓClₓ, where the value of X may be adjusted as necessary and is preferably in the range of 0.3-1.5 from the viewpoint of stability of the solution.

### [Water]

The water which is used in a preferred mode of the production method is not particularly restricted and may be any water source that contains no impurities that could impair the characteristics of the ceramic fiber of the invention. Distilled water or ion-exchanged water is preferred from the viewpoint of ready availability.

The amount of water added is not particularly restricted so long as it is an amount that dissolves the titanium compound, silicon compound and aluminum compound and allows ceramic fiber to be formed from the obtained fiber-forming composition, but it is preferably at least 0.5 and no greater than 100 times, and more preferably at least 1 and no greater than 50 times, the mass of the metal compound in the fiber-forming composition.

### [Fiber-forming substance]

According to a preferred mode of the production method for the ceramic fiber of the invention, the fiber-forming substance must be dissolved or dispersed in the fiber-forming composition in order to impart spinnability to the fiber-forming composition. There are no particular restrictions on the fiber-forming substance used so long as it allows production of a ceramic fiber according to the invention, but organic polymers are preferred from the viewpoint of easier manageability and removal during the calcination step.

As examples of organic polymers to be used, there may be mentioned polyethylene oxide, polyvinyl alcohol, polyvinyl ester, polyvinyl ether, polyvinylpyridine, polyacrylamide, ether cellulose, pectin, starch, polyvinyl chloride, polyacrylonitrile, polylactic acid, polyglycolic acid, polylactic acid-polyglycolic acid copolymer, polycaprolactone, polybutylene succinate, polyethylene succinate, polystyrene, polycarbonate, polyhexamethylene carbonate, polyarylate, polyvinyl isocyanate, polybutyl isocyanate, polymethyl methacrylate, polyethyl methacrylate, poly-n-propyl methacrylate, poly-n-butyl methacrylate, polymethyl acrylate, polyethyl acrylate, polybutyl acrylate, polyethylene terephthalate, polytrimethylene terephthalate, polyethylene naphthalate, polyparaphenyleneterephthalamide, polyparaphenyleneterephthalamide-3,4'-oxydiphenyleneterephthalamide copolymer, polymetaphenyleneisophthalamide, cellulose diacetate, cellulose triacetate, methylcellulose, propylcellulose, benzylcellulose, fibroin, natural rubber, polyvinyl acetate, polyvinyl methyl ether, polyvinyl ethyl ether, polyvinyl-n-propyl ether, polyvinyl isopropyl ether, polyvinyl-n-butyl ether, polyvinyl isobutyl ether, polyvinyl tertiary-butyl ether, polyvinylidene chloride, poly(N-vinylpyrrolidone), poly(N-vinylcarbazole), poly(4-vinylpyridine), polyvinylmethylketone, polymethylisopropenylketone, polypropylene oxide, polycyclopentene oxide, polystyrenesulfone, nylon 6, nylon 66, nylon 11, nylon 12, nylon 610, nylon 612, and copolymers of the foregoing.

Preferred among these from the viewpoint of solubility in water-containing solvents are polyethylene oxide, polyvinyl alcohol, polyvinyl ester, polyvinyl ether, polyvinylpyridine, polyacrylamide, ether cellulose, pectin, starch and the like, with polyethylene oxide being especially preferred.

There are no particular restrictions on the number-average molecular weight of the organic polymer used so long as it allows the ceramic fiber of the invention to be produced, but a low number-average molecular weight is not preferred because it will require addition of more organic polymer, more gas will be generated during the calcination step, and defects in the structure of the obtained ceramic fiber will be more frequent. On the other hand, a high number-average molecular weight is also not preferred because it will increase the viscosity and result in more difficult spinning. The preferred number-average molecular weight for the organic polymer in the case of polyethylene oxide is in the range of 100,000-8,000,000 and more preferably in the range of 100,000-600,000.

From the viewpoint of improving the denseness of the ceramic fiber, the amount of fiber-forming substance added is preferably as small as possible in a concentration range that allows formation of fiber, and it is preferably in the range of 0.01 wt% to 5 wt% and more preferably in the range of 0.01 wt% to 2 wt% with respect to the total fiber-forming composition.

### [Other components]

According to a preferred mode of the production method used to obtain the ceramic fiber of the invention, components other than the essential components may also be included as components of the fiber-forming composition, so long as fiber can be formed from the fiber-forming composition and the gist of the invention is still satisfied.

According to the invention, zirconium compounds, for example, may be added in addition to titanium compounds, silicon compounds and aluminum compounds, in order to improve the dynamic strength of the obtained ceramic fiber. As examples of zirconium compounds to be added, there may be mentioned zirconium oxychloride, zirconium acetate, zirconium hydroxyacetate and the like, among which zirconium oxychloride is preferred from the viewpoint of solution stability.

### [Solvent]

Water is used as an essential component according to a preferred mode of the production process for obtaining the ceramic fiber of the invention, with the water also functioning as a solvent. According to a preferred mode, a solvent other than water, such as an alcohol, ketone, amine, amide, carboxylic acid or the like may also be used, or salt such as ammonium chloride may be added, from the viewpoint of improving the stability of the fiber-forming composition and the spinning stability. A carboxylic acid is most preferably used from the viewpoint of improving the stability of the fiber-forming composition in the spinning step, with acetic acid being especially preferred.

### [Fiber-forming composition preparation step]

In the fiber-forming composition preparation step, a fiber-forming composition is prepared comprising a titanium compound, silicon compound, aluminum compound, water and a fiber-forming substance.

The method of preparing the composition, in the preferred mode of the production method used to obtain a ceramic fiber of the invention, is not particularly restricted so long as a fiber-forming composition containing the aforementioned essential components can be prepared. For example, the composition may be prepared by mixing the components. The mixing method in such cases is not particularly restricted, and may be a known method such as stirring. The order of mixing is also not particularly restricted, and the components may be added simultaneously or one after another. According to the invention, the solvent other than water and the other optional components, when added for increased solution stability of the fiber-forming composition and spinning stability, may be added at any point during the fiber-forming composition preparation step.

### [Spinning step]

In the spinning step, the fiber-forming composition obtained in the manner described above is ejected by an electrospinning method to form fiber. The spinning method and spinning apparatus used in the spinning step will now be described.

### [Spinning method]

In a preferred mode of the spinning step, fiber is formed by an electrospinning method. Here, "electrospinning method" refers to a method of forming fibrous materials by discharging a solution or dispersion containing a fiber-forming matrix into an electrostatic field formed between electrodes, and drawing the solution or dispersion toward the electrodes. The fibrous material obtained by the spinning is accumulated onto collecting plates serving as the electrodes in the accumulation step described hereunder.

The fibrous material that is formed includes not only fiber from which the solvent in the fiber-forming composition has been completed removed, but also fibrous material with residue of the solvent.

Electrospinning is normally carried out at room temperature, but if volatilization of the solvent is inadequate it may be necessary to control the temperature of the spinning atmosphere or control the temperature of the collecting plates.

### [Spinning apparatus]

The apparatus used for the electrospinning will now be described.

The electrodes used to create the electrostatic field may be made of metal, inorganic materials or organic material so long as it exhibits conductivity. A thin-film of a metal, inorganic material or organic material exhibiting conductivity may also be formed on an insulator.

The electrostatic field is formed between a pair or plurality of electrodes, and a high voltage can be applied between any electrodes that form an electrostatic field. This also includes cases where, for example, a total of three electrodes are used, such as two high voltage electrodes with different voltage values (for example, 15 kV and 10 kV) and one electrode connected to the earth, as well as cases wherein more than three electrodes are employed.

### [Accumulation step]

In the accumulation step, the fiber obtained in the aforementioned spinning step is accumulated to obtain a fiber aggregate. Specifically, the fibrous material formed in the spinning step is accumulated (layered) on the collecting plate electrodes to obtain a fiber aggregate.

A flat fiber aggregate can therefore be obtained by using flat surfaces as the electrodes serving as the collecting plates, but the collecting plate shape can also be changed to form fiber aggregates with desired shapes. When the fiber aggregate is accumulated (layered) at one concentrated location of the collecting plates, resulting in low uniformity, the plates may be shaken or rotated.

The fiber aggregate will likewise include not only aggregate from which the solvent in the fiber-forming composition has been completely removed, but also aggregate with the solvent remaining in the fibrous material.

### [Calcination step]

In the calcination step, the fiber aggregate obtained in the previous accumulation step is calcined to obtain a fiber structure composed of ceramic fiber of the invention.

An ordinary electric furnace may be used for the calcination, but if necessary an electric furnace that allows gas-exchange of the calcining atmosphere may be used. The calcining temperature is preferably in the range of 600°C to 1400°C. Calcining at 600°C or higher can produce a ceramic fiber with excellent heat resistance. However, calcining at above 1400°C will increase grain growth size in the ceramic fiber and/or cause fusion of the low melting point substances, thereby lowering the dynamic strength. A more preferred calcining temperature in the range of 800°C to 1200°C.

### [Examples]

The present invention will now be explained in greater detail by examples, with the understanding that the invention is not in any way restricted by the examples.

### <Measurement and evaluation methods>

In the examples and comparative examples, the following properties were measured and evaluated by the following methods.

### [Mean fiber diameter]

The surface of the obtained ceramic fiber was photographed (magnification: 2000x) with a scanning electron microscope (trade name: S-2400 by Hitachi, Ltd.) to obtain a photograph image. Twenty points on the photograph image were randomly selected and the filament diameter was measured. The average value for all of the fiber diameter measurements (n = 20) was calculated to obtain the mean fiber diameter of the ceramic fiber.

### [Photocatalytic activity]

Discoloration reaction with methylene blue was conducted to evaluate the photocatalytic activity of the ceramic fiber. Specifically, 10 mL of a 10 ppm methylene blue aqueous solution was poured into a 55 mm dish, and 20 mg of ceramic fiber was immersed in the solution. Next, the dish in which the ceramic fiber was immersed was placed in an ultraviolet box (Model Cat.No.1469 UV IRRADIATER by Sogo Laboratory Glass Works Co., Ltd.), and exposed to ultraviolet rays for 6 hours at an intensity of 14 mW/cm². In order to account for the effect of simple adsorption onto the ceramic fiber, a dish in which the ceramic fiber was immersed in the same manner was also stored in a dark room for 6 hours. The absorbance at 665 nm was measured for the ultraviolet irradiated methylene blue aqueous solution and the methylene blue aqueous solution stored in the dark room, and the ratio between them (absorbance of irradiated solution/absorbance of dark room-stored solution) was determined to evaluate the photocatalytic activity as the photocatalytic activity parameter.

### Photocatalytic activity parameter = absorbance of irradiated solution/absorbance of dark room-stored solution

### (A smaller value indicates higher photocatalytic activity.)

### <Example 1>

### [Fiber-forming composition preparation step]

To 1 part by weight of tetraethyl orthosilicate (Wako Pure Chemical Industries, Ltd.) there was added 1 part by weight of an aqueous solution of sulfuric acid prepared to pH 1. The liquid underwent phase separation immediately after addition of the sulfuric acid aqueous solution, but compatibilized upon vigorous stirring at room temperature for 10 minutes.

With 76 parts by weight of the obtained compatibilized solution there were combined 100 parts by weight of a basic aluminum chloride aqueous solution (trade name: ALFINE 83 by Taimei Chemicals Co., Ltd., Al₂O₃-equivalent content: 23.3 wt%, basicity: 83.1 wt%), 136 parts by weight of a 50% diammonium dihydroxy titanium lactate aqueous solution (Sigma-Aldrich Japan, KK.), 3.8 parts by weight of polyethylene oxide (Sigma-Aldrich Japan, KK., number-average molecular weight: 200,000) and 68 parts by weight of acetic acid (Wako Pure Chemical Industries, Ltd., reagent grade), and a homogeneous fiber-forming composition (spinning solution) was prepared.

### [Spinning step/accumulation step]

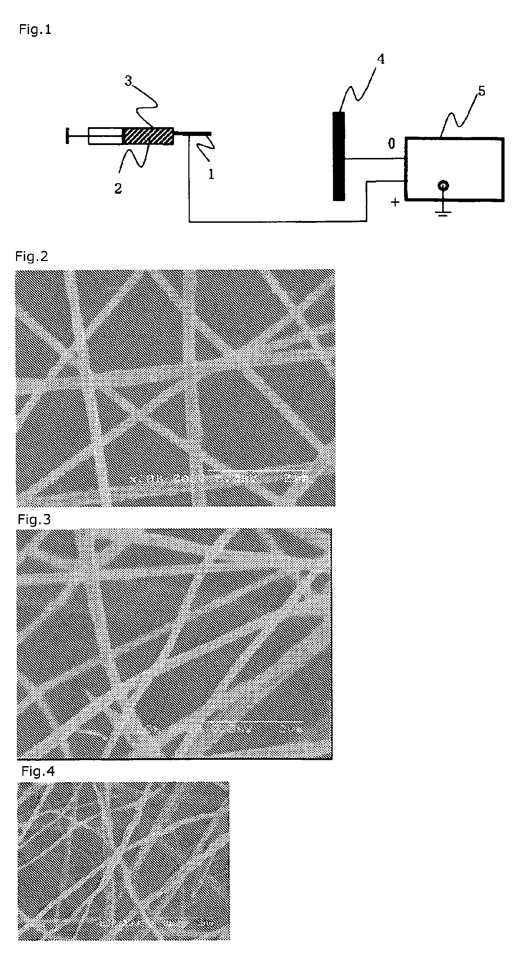

The fiber-forming composition (spinning solution) obtained as described above was used for fiber spinning by ejecting the fiber-forming composition using the electrospinning apparatus shown in Fig. 1. The spun fiber was accumulated to produce a fiber aggregate. The inner diameter of the ejection nozzle 1 was 0.4 mm, the voltage was 15 kV, and the distance from the ejection nozzle 1 to the electrode 4 was 10 cm.

### [Calcination step]

The obtained fiber aggregate was raised in temperature to 1000°C over a period of 1.8 hours using an electric furnace in an air atmosphere, and then held at 1000°C for 2 hours to obtain a fiber structure of the ceramic fiber.

### [Measurement and evaluation]

The obtained ceramic fiber contained no shots, and contained 27 mol% titanium atoms, 21 mol% silicon atoms and 52 mol% aluminum atoms with respect to the total atomic weight of elements other than oxygen.

The measurement and evaluation described above were carried out for the obtained ceramic fiber. As a result, the mean fiber diameter was 200 nm, the photocatalytic activity parameter was 0.68, and maintenance of photocatalytic activity was confirmed. Fig. 2 shows an electron microscope photograph of the obtained ceramic fiber.

### <Example 2>

### [Fiber-forming composition preparation step]

To 1 part by weight of tetraethyl orthosilicate (Wako Pure Chemical Industries, Ltd.) there was added 1 part by weight of an aqueous solution of sulfuric acid prepared to pH 1. The liquid underwent phase separation immediately after addition of the sulfuric acid aqueous solution, but compatibilized upon vigorous stirring at room temperature for 10 minutes.

With 76 parts by weight of the obtained compatibilized solution there were combined 100 parts by weight of a basic aluminum chloride aqueous solution (trade name: ALFINE 83 by Taimei Chemicals Co., Ltd., Al₂O₃-equivalent content: 23.3 wt%, basicity: 83.1 wt%), 136 parts by weight of a 50% diammonium dihydroxy titanium lactate aqueous solution (Sigma-Aldrich Japan, KK.), 37 parts by weight of zirconium oxychloride octahydrate (Wako Pure Chemical Industries, Ltd., high grade), 4 parts by weight of polyethylene oxide (Sigma-Aldrich Japan, KK., number-average molecular weight: 200,000) and 68 parts by weight of acetic acid (Wako Pure Chemical Industries, Ltd., reagent grade), and a homogeneous fiber-forming composition (spinning solution) was prepared.

### [Spinning step/accumulation step/calcination step]

The obtained fiber-forming composition (spinning solution) was used to obtain a ceramic fiber structure in the same manner as Example 1.

### [Measurement and evaluation]

The obtained ceramic fiber contained no shots, and contained 23 mol% titanium atoms, 19 mol% silicon atoms and 46 mol% aluminum atoms with respect to the total atomic weight of elements other than oxygen.

The measurement and evaluation described above were carried out for the obtained ceramic fiber. As a result, the mean fiber diameter was 200 nm, the photocatalytic activity parameter was 0.88, and maintenance of photocatalytic activity was confirmed. Fig. 3 shows an electron microscope photograph of the obtained ceramic fiber.

### <Comparative Example 1>

There were combined 74 parts by weight of a basic aluminum chloride aqueous solution (trade name: ALFINE 83 by Taimei Chemicals Co., Ltd., Al₂O₃-equivalent content: 23.3 wt%, basicity: 83.1 wt%), 100 parts by weight of a 50% diammonium dihydroxy titanium lactate aqueous solution (Sigma-Aldrich Japan, KK.), 2.7 parts by weight of polyethylene oxide (Sigma-Aldrich Japan, KK., number-average molecular weight: 200,000) and 100 parts by weight of acetic acid (Wako Pure Chemical Industries, Ltd., reagent grade), and a homogeneous fiber-forming composition (spinning solution) was prepared.

### [Spinning step/accumulation step/calcination step]

The obtained fiber-forming composition (spinning solution) was used to obtain a ceramic fiber structure in the same manner as Example 1.

### [Measurement and evaluation]

The obtained ceramic fiber contained no shots, and contained 67 mol% titanium atoms and 33 mol% aluminum atoms with respect to the total atomic weight of elements other than oxygen.

The measurement and evaluation described above were carried out for the obtained ceramic fiber. As a result, the mean fiber diameter was 200 nm, the photocatalytic activity parameter was 1.0, and maintenance of photocatalytic activity was not maintained. Fig. 4 shows an electron microscope photograph of the obtained ceramic fiber.

### <Example 3>

A ceramic fiber structure was obtained in the same manner as Example 1, except for using 75 parts by weight of a basic aluminum chloride aqueous solution, 5.2 parts by weight of polyethylene oxide and 104 parts by weight of acetic acid.

### [Measurement and evaluation]

The obtained ceramic fiber contained no shots, and contained 31 mol% titanium atoms, 24 mol% silicon atoms and 45 mol% aluminum atoms with respect to the total atomic weight of elements other than oxygen.

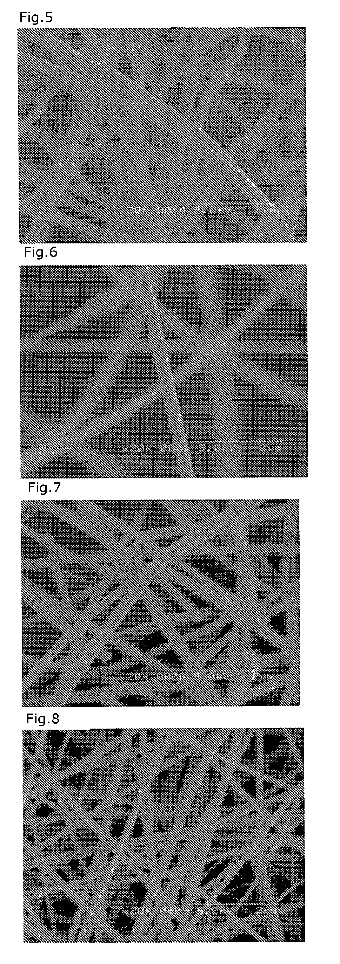

The measurement and evaluation described above were carried out for the obtained ceramic fiber. As a result, the mean fiber diameter was 400 nm, the photocatalytic activity parameter was 0.70, and maintenance of photocatalytic activity was confirmed. Fig. 5 shows an electron microscope photograph of the obtained ceramic fiber.

### <Example 4>

A ceramic fiber structure was obtained in the same manner as Example 1 except for using 251 parts by weight of a basic aluminum chloride aqueous solution, 23 parts by weight of polyethylene oxide and 121 parts by weight of acetic acid.

### [Measurement and evaluation]

The obtained ceramic fiber contained no shots, and contained 15 mol% titanium atoms, 12 mol% silicon atoms and 74 mol% aluminum atoms with respect to the total atomic weight of elements other than oxygen.

The measurement and evaluation described above were carried out for the obtained ceramic fiber. As a result, the mean fiber diameter was 300 nm, the photocatalytic activity parameter was 0.90, and maintenance of photocatalytic activity was confirmed. Fig. 6 shows an electron microscope photograph of the obtained ceramic fiber.

### <Example 5>

A ceramic fiber structure was obtained in the same manner as Example 1 except for using 272 parts by weight of a 50% diammonium dihydroxy titanium lactate aqueous solution, 6.5 parts by weight of polyethylene oxide and 194 parts by weight of acetic acid.

### [Measurement and evaluation]

The obtained ceramic fiber contained no shots, and contained 42 mol% titanium atoms, 17 mol% silicon atoms and 41 mol% aluminum atoms with respect to the total atomic weight of elements other than oxygen.

The measurement and evaluation described above were carried out for the obtained ceramic fiber. As a result, the mean fiber diameter was 400 nm, the photocatalytic activity parameter was 0.65, and maintenance of photocatalytic activity was confirmed. Fig. 7 shows an electron microscope photograph of the obtained ceramic fiber.

### <Example 6>

A ceramic fiber structure was obtained in the same manner as Example 1 except for using 678 parts by weight of a 50% diammonium dihydroxy titanium lactate aqueous solution, 13 parts by weight of polyethylene oxide and 458 parts by weight of acetic acid.

### [Measurement and evaluation]

The obtained ceramic fiber contained no shots, and contained 64 mol% titanium atoms, 10 mol% silicon atoms and 26 mol% aluminum atoms with respect to the total atomic weight of elements other than oxygen.

The measurement and evaluation described above were carried out for the obtained ceramic fiber. As a result, the mean fiber diameter was 200 nm, the photocatalytic activity parameter was 0.64, and maintenance of photocatalytic activity was confirmed. Fig. 8 shows an electron microscope photograph of the obtained ceramic fiber.

### <Example 7>

A ceramic fiber structure was obtained in the same manner as Example 1 except for using 9 parts by weight of a compatibilized solution obtained from a tetraethyl orthosilicate and sulfuric acid aqueous solution, 3.4 parts by weight of polyethylene oxide and 99 parts by weight of acetic acid.

### [Measurement and evaluation]

The obtained ceramic fiber contained no shots, and contained 33 mol% titanium atoms, 3 mol% silicon atoms and 64 mol% aluminum atoms with respect to the total atomic weight of elements other than oxygen.

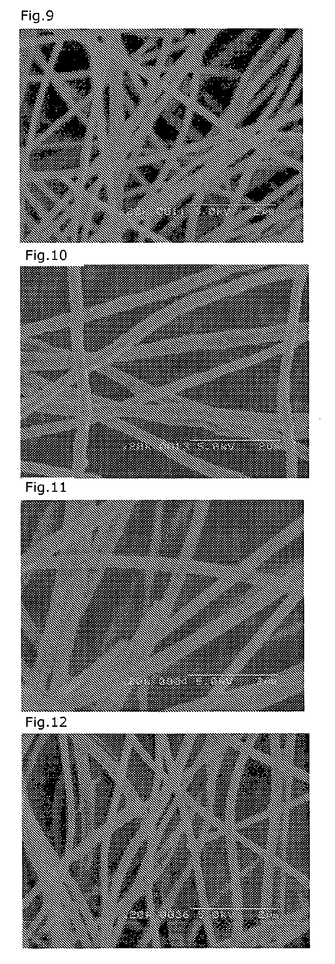

The measurement and evaluation described above were carried out for the obtained ceramic fiber. As a result, the mean fiber diameter was 200 nm, the photocatalytic activity parameter was 0.70, and maintenance of photocatalytic activity was confirmed. Fig. 9 shows an electron microscope photograph of the obtained ceramic fiber.

### <Example 8>

A ceramic fiber structure was obtained in the same manner as Example 1 except for using 124 parts by weight of a compatibilized solution obtained from a tetraethyl orthosilicate and sulfuric acid aqueous solution, 4.9 parts by weight of polyethylene oxide and 132 parts by weight of acetic acid.

### [Measurement and evaluation]

The obtained ceramic fiber contained no shots, and contained 23 mol% titanium atoms, 30 mol% silicon atoms and 46 mol% aluminum atoms with respect to the total atomic weight of elements other than oxygen.

The measurement and evaluation described above were carried out for the obtained ceramic fiber. As a result, the mean fiber diameter was 300 nm, the photocatalytic activity parameter was 0.75, and maintenance of photocatalytic activity was confirmed. Fig. 10 shows an electron microscope photograph of the obtained ceramic fiber.

### <Comparative Example 2>

A ceramic fiber structure was obtained in the same manner as Example 1 except for using 13 parts by weight of a 50% diammonium dihydroxy titanium lactate aqueous solution, 2.1 parts by weight of polyethylene oxide and 27 parts by weight of acetic acid.

### [Measurement and evaluation]

The obtained ceramic fiber contained no shots, and contained 3 mol% titanium atoms, 28 mol% silicon atoms and 67 mol% aluminum atoms with respect to the total atomic weight of elements other than oxygen.

The measurement and evaluation described above were carried out for the obtained ceramic fiber. As a result, the mean fiber diameter was 400 nm, the photocatalytic activity parameter was 1.00, and photocatalytic activity was not maintained. Fig. 11 shows an electron microscope photograph of the obtained ceramic fiber.

### <Example 9>

A ceramic fiber structure was obtained in the same manner as Example 2 except for using 271 parts by weight of a 50% diammonium dihydroxy titanium lactate aqueous solution, 6.2 parts by weight of polyethylene oxide and 136 parts by weight of acetic acid.

### [Measurement and evaluation]

The obtained ceramic fiber contained no shots, and contained 38 mol% titanium atoms, 15 mol% silicon atoms and 38 mol% aluminum atoms with respect to the total atomic weight of elements other than oxygen.

The measurement and evaluation described above were carried out for the obtained ceramic fiber. As a result, the mean fiber diameter was 200 nm, the photocatalytic activity parameter was 0.85, and maintenance of photocatalytic activity was confirmed. Fig. 12 shows an electron microscope photograph of the obtained ceramic fiber.

### <Example 10>

A ceramic fiber structure was obtained in the same manner as Example 2 except for using 678 parts by weight of a 50% diammonium dihydroxy titanium lactate aqueous solution, 12 parts by weight of polyethylene oxide and 339 parts by weight of acetic acid.

### [Measurement and evaluation]

The obtained ceramic fiber contained no shots, and contained 60 mol% titanium atoms, 10 mol% silicon atoms and 24 mol% aluminum atoms with respect to the total atomic weight of elements other than oxygen.

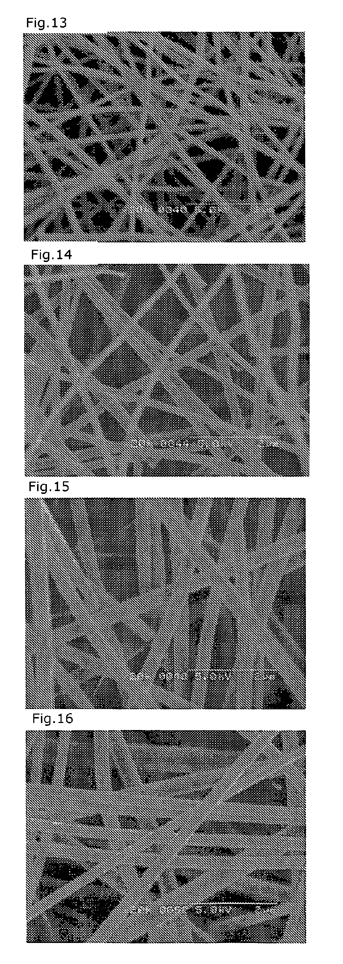

The measurement and evaluation described above were carried out for the obtained ceramic fiber. As a result, the mean fiber diameter was 200 nm, the photocatalytic activity parameter was 0.62, and maintenance of photocatalytic activity was confirmed. Fig. 13 shows an electron microscope photograph of the obtained ceramic fiber.

### <Example 11>

A ceramic fiber structure was obtained in the same manner as Example 2, except for using 10 parts by weight of a compatibilized solution obtained from a tetraethyl orthosilicate and sulfuric acid aqueous solution.

### [Measurement and evaluation]

The obtained ceramic fiber contained no shots, and contained 28 mol% titanium atoms, 3 mol% silicon atoms and 55 mol% aluminum atoms with respect to the total atomic weight of elements other than oxygen.

The measurement and evaluation described above were carried out for the obtained ceramic fiber. As a result, the mean fiber diameter was 300 nm, the photocatalytic activity parameter was 0.85, and maintenance of photocatalytic activity was confirmed. Fig. 14 shows an electron microscope photograph of the obtained ceramic fiber.

### <Example 12>

A ceramic fiber structure was obtained in the same manner as Example 2 except for using 95 parts by weight of a compatibilized solution obtained from a tetraethyl orthosilicate and sulfuric acid aqueous solution.

### [Measurement and evaluation]

The obtained ceramic fiber contained no shots, and contained 22 mol% titanium atoms, 22 mol% silicon atoms and 44 mol% aluminum atoms with respect to the total atomic weight of elements other than oxygen.

The measurement and evaluation described above were carried out for the obtained ceramic fiber. As a result, the mean fiber diameter was 400 nm, the photocatalytic activity parameter was 0.82, and maintenance of photocatalytic activity was confirmed. Fig. 15 shows an electron microscope photograph of the obtained ceramic fiber.

### <Comparative Example 3>

A ceramic fiber structure was obtained in the same manner as Example 2 except for using 380 parts by weight of a compatibilized solution obtained from a tetraethyl orthosilicate and sulfuric acid aqueous solution, 7.9 parts by weight of polyethylene oxide and 139 parts by weight of acetic acid.

### [Measurement and evaluation]

The obtained ceramic fiber contained no shots, and contained 13 mol% titanium atoms, 53 mol% silicon atoms and 27 mol% aluminum atoms with respect to the total atomic weight of elements other than oxygen.

The measurement and evaluation described above were carried out for the obtained ceramic fiber. As a result, the mean fiber diameter was 400 nm, the photocatalytic activity parameter was 1.00, and photocatalytic activity was not maintained. Fig. 16 shows an electron microscope photograph of the obtained ceramic fiber.

### <Example 13>

A ceramic fiber structure was obtained in the same manner as Example 2, except for using 8 parts by weight of zirconium oxychloride octahydrate.

### [Measurement and evaluation]

The obtained ceramic fiber contained no shots, and contained 26 mol% titanium atoms, 20 mol% silicon atoms and 51 mol% aluminum atoms with respect to the total atomic weight of elements other than oxygen.

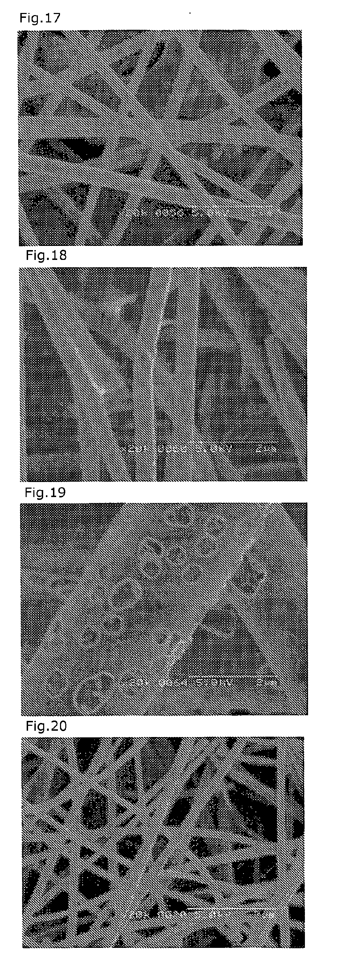

The measurement and evaluation described above were carried out for the obtained ceramic fiber. As a result, the mean fiber diameter was 300 nm, the photocatalytic activity parameter was 0.80, and maintenance of photocatalytic activity was confirmed. Fig. 17 shows an electron microscope photograph of the obtained ceramic fiber.

### <Comparative Example 4>

A ceramic fiber structure was obtained in the same manner as Example 2 except for using 74 parts by weight of zirconium oxychloride octahydrate.

### [Measurement and evaluation]

The obtained ceramic fiber contained no shots, and contained 21 mol% titanium atoms, 17 mol% silicon atoms and 42 mol% aluminum atoms with respect to the total atomic weight of elements other than oxygen.

The measurement and evaluation described above were carried out for the obtained ceramic fiber. As a result, the mean fiber diameter was 500 nm, the photocatalytic activity parameter was 1.00, and photocatalytic activity was not maintained. Fig. 18 shows an electron microscope photograph of the obtained ceramic fiber.

### <Comparative Example 5>

A ceramic fiber structure was obtained in the same manner as Example 2 except for using 222 parts by weight of zirconium oxychloride octahydrate, 6.7 parts by weight of polyethylene oxide and 128 parts by weight of acetic acid.

### [Measurement and evaluation]

The obtained ceramic fiber contained no shots, and contained 15 mol% titanium atoms, 12 mol% silicon atoms and 29 mol% aluminum atoms with respect to the total atomic weight of elements other than oxygen.

The measurement and evaluation described above were carried out for the obtained ceramic fiber. As a result, the mean fiber diameter was 3 µm, the photocatalytic activity parameter was 1.00, and photocatalytic activity was not maintained. Fig. 19 shows an electron microscope photograph of the obtained ceramic fiber.

### <Comparative Example 6>

A ceramic fiber structure was obtained in the same manner as Example 2, except for using 25 parts by weight of a basic aluminum chloride aqueous solution.

### [Measurement and evaluation]

The obtained ceramic fiber contained no shots, and contained 36 mol% titanium atoms, 28 mol% silicon atoms and 18 mol% aluminum atoms with respect to the total atomic weight of elements other than oxygen.

The measurement and evaluation described above were carried out for the obtained ceramic fiber. As a result, the mean fiber diameter was 200 nm, the photocatalytic activity parameter was 1.00, and photocatalytic activity was not maintained. Fig. 20 shows an electron microscope photograph of the obtained ceramic fiber.

### <Comparative Example 7>

A ceramic fiber structure was obtained in the same manner as Example 2 except for using 50 parts by weight of a basic aluminum chloride aqueous solution, 37 parts by weight of polyethylene oxide and 75 parts by weight of acetic acid.

### [Measurement and evaluation]

The obtained ceramic fiber contained no shots, and contained 31 mol% titanium atoms, 24 mol% silicon atoms and 30 mol% aluminum atoms with respect to the total atomic weight of elements other than oxygen.

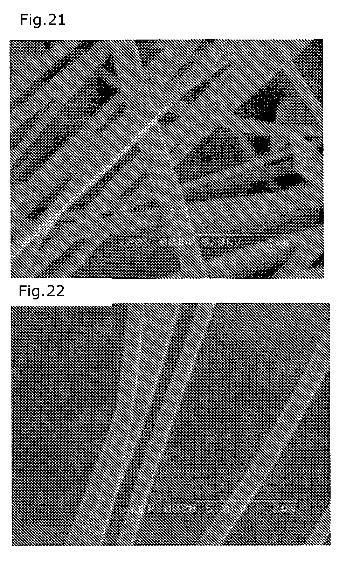

The measurement and evaluation described above were carried out for the obtained ceramic fiber. As a result, the mean fiber diameter was 300 nm, the photocatalytic activity parameter was 1.00, and photocatalytic activity was not maintained. Fig. 21 shows an electron microscope photograph of the obtained ceramic fiber.

### <Comparative Example 8>

It was attempted to produce a spinning solution in the same manner as Example 2 except for using 5 parts by weight of a basic aluminum chloride aqueous solution. However, the solution immediately gelled and spinning could not be accomplished.

### <Example 14>

A ceramic fiber structure was obtained in the same manner as Example 2 except for using 208 parts by weight of a basic aluminum chloride aqueous solution, 63 parts by weight of a compatibilized solution obtained from a tetraethyl orthosilicate and sulfuric acid aqueous solution, 32 parts by weight of zirconium oxychloride octahydrate, 5 parts by weight of polyethylene oxide and 72 parts by weight of acetic acid.

### [Measurement and evaluation]

The obtained ceramic fiber contained no shots, and contained 16 mol% titanium atoms, 11 mol% silicon atoms and 66 mol% aluminum atoms with respect to the total atomic weight of elements other than oxygen.

The measurement and evaluation described above were carried out for the obtained ceramic fiber. As a result, the mean fiber diameter was 400 nm, the photocatalytic activity parameter was 0.88, and maintenance of photocatalytic activity was confirmed. Fig. 22 shows an electron microscope photograph of the obtained ceramic fiber.

## Claims

1. A ceramic fiber with photocatalytic activity,
composed of an oxide ceramic containing between 5 mol% and 80 mol% titanium atoms, 1 mol% and 50 mol% silicon atoms and 10 mol% and 90 mol% aluminum atoms, with respect to the total atomic weight of elements other than oxygen atoms, and wherein
the total of the titanium atom content and aluminum atom content is greater than 65 mol% with respect to the total atomic weight of elements other than oxygen atoms and
having a mean fiber diameter of between 50 nm and 1000 nm.

2. A ceramic fiber according to claim 1, wherein the ceramic fiber contains no shots immediately after calcination.

3. A ceramic fiber according to claim 1 or 2, which has photocatalytic activity even after heat treatment at 1000°C for 10 minutes.

4. A method for production of a ceramic fiber according to claim 1 that comprises
a fiber-forming composition preparation step in which a fiber-forming composition containing a titanium compound, silicon compound, aluminum compound, water and a fiber-forming substance is prepared,
a spinning step in which the fiber-forming composition is ejected by an electrospinning process to obtain fiber,
an accumulation step in which the fiber is accumulated to obtain a fiber aggregate, and
a calcination step in which the fiber aggregate is fired to obtain a fiber structure.

5. A method for production a ceramic fiber according to claim 4, wherein the fiber-forming substance is an organic polymer with a number-average molecular weight of between 10,000 and 10,000,000.

6. A method for production of a ceramic fiber according to claim 5, wherein the organic polymer is polyethylene oxide.

## Patentansprüche

1. Keramikfaser mit photokatalytischer Aktivität,
aufgebaut aus einer Oxidkeramik, die zwischen 5 Mol-% und 80 Mol-% Titanatome, 1 Mol-% und 50 Mol-% Siliciumatome und 10 Mol-% und 90 Mol-% Aluminiumatome, bezogen auf das Atomgesamtgewicht der von Sauerstoffatomen verschiedenen Elemente, enthält, und wobei
die Summe des Titanatomgehalts und des Aluminiumatomgehalts größer als 65 Mol-%, bezogen auf das Atomgesamtgewicht der von Sauerstoffatomen verschiedenen Elemente, ist, und
mit einem mittleren Faserdurchmesser zwischen 50 nm und 1000 nm.

2. Keramikfaser nach Anspruch 1, wobei die Keramikfaser unmittelbar nach der Calcinierung keine Shots enthält.

3. Keramikfaser nach Anspruch 1 oder 2, die selbst nach Wärmebehandlung bei 1000°C über einen Zeitraum von 10 Minuten photokatalytische Aktivität aufweist.

4. Verfahren zur Herstellung einer Keramikfaser nach Anspruch 1, das folgendes umfaßt:
einen Schritt der Herstellung einer faserbildenden Zusammensetzung, bei dem man eine faserbildende Zusammensetzung, die eine Titanverbindung, eine Siliciumverbindung, eine Aluminiumverbindung,
Wasser und eine faserbildende Substanz enthält, bereitstellt,
einen Spinnschritt, bei dem man die faserbildende Zusammensetzung nach einem Elektrospinnverfahren ausstößt, wobei man eine Faser erhält,
einen Akkumulationsschritt, bei dem man die Faser akkumuliert, wobei man ein Faseraggregat erhält, und
einen Calcinierungsschritt, bei dem man das Faseraggregat brennt, wobei man eine Faserstruktur erhält.

5. Verfahren zur Herstellung einer Keramikfaser nach Anspruch 4, bei dem es sich bei der faserbildenden Substanz um ein organisches Polymer mit einem zahlenmittleren Molekulargewicht zwischen 10.000 und 10.000.000 handelt.

6. Verfahren zur Herstellung einer Keramikfaser nach Anspruch 5, bei dem es sich bei dem organischen Polymer um Polyethylenoxid handelt.

## Revendications

1. Fibre céramique présentant une activité photocatalytique,
composée d'une céramique d'oxydes contenant entre 5 % en mole et 80 % en mole d'atomes de titane, entre 1 % en mole et 50 % en mole d'atomes de silicium et entre 10 % en mole et 90 % en mole d'atomes d'aluminium, par rapport au poids atomique total des éléments autres que les atomes d'oxygène, et
dans laquelle le total de la teneur des atomes de titane et de la teneur des atomes d'aluminium est supérieur à 65 % en mole par rapport au poids atomique total des éléments autres que les atomes d'oxygène et
ayant un diamètre moyen de fibre compris entre 50 nm et 1 000 nm.

2. Fibre céramique selon la revendication 1, la fibre céramique ne contenant pas de particules non fibreuses juste après calcination.

3. Fibre céramique selon la revendication 1 ou 2, qui possède une activité photocatalytique même après traitement thermique à 1 000 °C pendant 10 minutes.

4. Procédé pour la production d'une fibre céramique selon la revendication 1 qui comprend
une étape de préparation de composition fibrogène dans laquelle une composition fibrogène contenant un composé du titane, un composé du silicium, un composé de l'aluminium, de l'eau et une substance fibrogène est préparée,
une étape de filage dans laquelle la composition fibrogène est éjectée par un procédé d'électrofilage pour obtenir une fibre,
une étape d'accumulation dans laquelle la fibre est accumulée pour obtenir un agrégat de fibre et
une étape de calcination dans laquelle l'agrégat de fibre est cuit pour obtenir une structure fibreuse.

5. Procédé pour la production d'une fibre céramique selon la revendication 4, dans lequel la substance fibrogène est un polymère organique ayant une masse moléculaire moyenne en nombre comprise entre 10 000 et 10 000 000.

6. Procédé pour la production d'une fibre céramique selon la revendication 5, dans lequel le polymère organique est du poly(oxyde d'éthylène).
